Europäisches Patentamt

European Patent Office

Office européen des brevets

(19)

(11) Numéro de publication : **0 085 012**
**B1**

(12)        **FASCICULE DE BREVET EUROPÉEN**

(45) Date de publication du fascicule du brevet :
**20.08.86**

(51) Int. Cl.⁴ : **G 01 B   7/03**, G 06 K 11/06

(21) Numéro de dépôt : **83400173.7**

(22) Date de dépôt : **26.01.83**

(54) **Procédé pour déterminer les coordonnées d'un point sur une surface et dispositif pour sa mise en œuvre.**

(30) Priorité : **27.01.82 FR 8201234**

(43) Date de publication de la demande :
**03.08.83 Bulletin 83/31**

(45) Mention de la délivrance du brevet :
**20.08.86 Bulletin 86/34**

(84) Etats contractants désignés :
**AT BE CH DE GB IT LI LU NL SE**

(56) Documents cités :
**US-A- 3 671 716**
**US-A- 3 806 912**
**US-A- 4 164 622**

(73) Titulaire : **BOUSSOIS S.A.**
**126-130 rue Jules Guesde**
**F-92302 Levallois-Perret (FR)**

(72) Inventeur : **Taupin, Pierre**
**10 avenue du Colonel Schouller**
**F-59600 Maubeuge (FR)**
Inventeur : **Goguillon, Claude**
**26 rue Hoche**
**F-59168 Boussois sur Sambre (FR)**
Inventeur : **de Moncuit, Frédéric**
**4 impasse Morlet**
**F-75011 Paris (FR)**

(74) Mandataire : **Bouju, André**
**Cabinet Bouju 38 avenue de la Grande Armée**
**F-75017 Paris (FR)**

EP 0 085 012 B1

Jouve, 18, rue St-Denis, 75001 Paris, France

## Description

La présente invention concerne un procédé pour déterminer les coordonnées d'un point sur une surface en le désignant par le contact d'un objet avec la surface.

L'invention concerne également un dispositif permettant notamment la mise en œuvre de ce procédé.

Les procédés connus de ce genre font généralement appel à une division préalable de la surface en un certain nombre de zones matérialisées ou non et sensibles sélectivement au contact de l'objet.

Le brevet américain 3 806 912 présente ainsi un tableau graphique muni d'un circuit imprimé formé de bandes parallèles également espacées, une bande résistive étant disposée entre deux bandes conductrices. La détermination des coordonnées X, Y, d'un point est effectuée à l'aide d'un stylet comportant une extrémité en matériau conducteur qui doit établir un pont de résistance négligeable entre trois bandes consécutives : une bande résistive et deux bandes conductrices. Dans ce dispositif les bandes résistives sont toutes interconnectées à la masse par l'intermédiaire d'une bande latérale conductrice, tandis que l'une de chaque paire de bandes conductrices est interconnectée à la masse par l'une de ses extrémités par l'intermédiaire d'une bande latérale résistante série, les autes bandes conductrices étant connectées directement par l'une de leurs extrémités à un dispositif de détection. Ce dispositif présente l'inconvénient de nécessiter la mise en place sur le tableau de bandes horizontales et verticales conductrices et résistantes avec des surfaces de recouvrement pour établir certaines connexions. Par ailleurs, la détermination des coordonnées d'un point est effectuée par la mise en connexion électrique de trois bandes consécutives par un stylet métallique présentant une résistance faible et spécialement conçu pour cette application.

Certains procédés, qui tendent en fait à réaliser des claviers de commande, utilisent des touches capacitives réparties en damier sur la surface. Chaque touche constitue un condensateur dont le diélectrique varie par attouchement de l'objet, qui peut par exemple être le doigt d'un opérateur. L'infrastructure électronique est relativement légère, mais la précision de localisation est assez faible, car les touches sont mises en place une fois pour toutes suivant un pas relativement grand.

Une meilleure précision est obtenue par les procédés utilisant un objet électriquement actif, connu sous le nom de « crayon de lumière », qui coopère avec une surface réalisée sous la forme d'écran cathodique de visualisation ; La localisation du point de contact résulte de l'interaction de l'objet avec le balayage électronique de l'écran. Les dispositifs impliqués par ces procédés font appel à des étages électroniques importants et complexes, qui sont essentiellement du domaine de l'informatique.

La présente invention vise à réaliser un procédé et un dispositif de détermination de coordonnées qui concilie une bonne précision de localisation avec une infrastructure électronique simple.

Ce problème est résolu, conformément à l'invention, en effectuant les opérations selon la méthode décrite par la revendication 1.

Grâce à l'invention, on évite le découpage de la surface suivant un quadrillage de touches établies une fois pour toute et l'on peut ainsi obtenir une excellente définition de la position du point en jouant sur la finesse et le pas des bandes, dans une mesure compatible avec les dimensions de la surface de contact de l'objet avec la surface.

Suivant une réalisation préférée du procédé, on explore le potentiel des bandes réceptrices cycliquement jusqu'à détecter sur l'une de ces bandes un potentiel différent de celui des autres bandes, et l'on arrête alors l'exploration pour effectuer une mesure de ce potentiel.

Cette disposition permet de se contenter d'un seul appareillage de mesure.

Suivant une première variante de réalisation du procédé, on applique à une extrémité de chaque bande émettrice un potentiel continu, l'autre extrémité de chaque bande étant mise à la masse.

Après une mesure de potentiel, on inverse la polarité des bandes émettrices pour effectuer une nouvelle mesure, et l'on répète ce cycle un certain nombre de fois.

Ces opérations permettent d'éliminer certains éléments constants inconnus, tels que la résistance de l'objet, ou certains éléments éventuellement variables tels que la tension d'alimentation.

Suivant une seconde variante de réalisation du procédé, on applique à une extrémité de chaque bande émettrice un potentiel alternatif d'environ 1 kHz, l'autre extrémité de chaque bande étant mise à la masse, et l'on filtre la tension mesurée.

On élimine ainsi les tensions parasites induites par l'environnement, notamment à la fréquence industrielle de 50 Hz ou 60 Hz.

De la même manière que précédemment, on effectue successivement un certain nombre de mesures de potentiel, on intervertit ensuite le potentiel alternatif et la masse, et l'on effectue à nouveau le même nombre de mesures.

Dans tous les cas, on calcule la moyenne des potentiels mesurés au cours des mesures successives pour minimiser les erreurs fortuites éventuelles.

Enfin, on recommence l'exploration quand toutes les bandes émettrices sont revenues au même potentiel.

Suivant un autre aspect de l'invention, le dispositif pour déterminer les coordonnées d'un point sur une surface comportant un certain nombre de bandes conductrices ($E_1$ à $E_5$, $R_1$ à $R_4$) pour former des zones distinctes sensibles sélectivement au contact d'un objet est caractérisé en ce qu'il comprend, sur la surface, un certain nombre de bandes conductrices résistantes émettrices ayant chacune une borne d'extrémité pour liaison à la masse et une borne d'extrémité pour liaison à un générateur de tension, et un certain nombre de bandes conductrices réceptrices imbriquées entre les bandes émettrices de telle sorte qu'il existe une bande conductrice réceptrice entre deux bandes conductrices résistantes émettrices chacune de ces bandes conductrices réceptrices ayant une borne d'extrémité pour liaison en parallèle avec un appareil de mesure de potentiel et présentant sur toute sa longueur une résistance linéaire sensiblement constante.

D'autres particularités et avantages de l'invention ressortiront encore de la description détaillée qui va suivre.

Aux dessins annexés, donnés à titre d'exemple non limitatif :

la figure 1 est une vue de face, semi-schématique, de la disposition des bandes sur la surface, conformément à l'invention ;

la figure 2 est une vue partielle de la figure 1, destinée à expliquer la mesure électrique du potentiel ;

la figure 3 est une vue en perspective montrant l'utilisation d'un dispositif conforme à l'invention ;

la figure 4 est un schéma d'ensemble du dispositif ;

la figure 5 est un organigramme fonctionnel temporel du système de traitement des mesures ;

la figure 6 représente des variantes de réalisation des bandes conductrices.

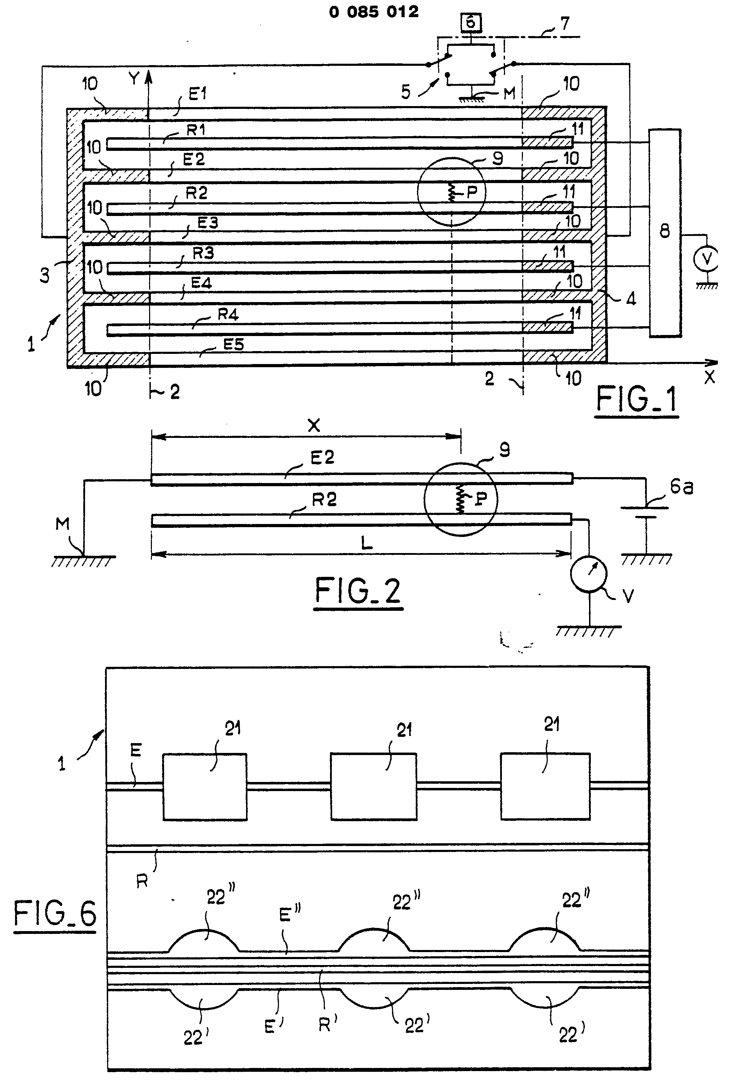

En référence à la figure 1, le dispositif comprend une surface transparente 1, par exemple en verre sodo-calcique qui constitue un écran de visualisation cathodique. Sur cette surface sont disposées un certain nombre de bandes émettrices parallèles E1 à E5 par exemple en oxyde d'étain $SnO_2$ dopé au fluor déposées par pyrolyse. Ces bandes sont conductrices et on leur donne une épaisseur telle que la résistance d'un tronçon de bande d'une longueur égale à sa largeur soit de l'ordre de 100 à 200 Ω.

Les extrémités 10 des bandes sont neutralisées par une bordure 2 de la surface et servent de connexions électriques avec des bandes collectrices 3, 4. Ces bandes peuvent être réalisées à partir d'un dépôt métallique conducteur et/ou soudable en argent ou nickel déposé par exemple sous forme d'une peinture, d'une résine ou d'un émail conducteurs déposés par sérigraphie.

Des bandes réceptrices R1 à R4 sont imbriquées entre les bandes émettrices E1 à E5 et sont constituées sensiblement de la même façon et comportent chacune une extrémité neutralisée formant borne de connexion 11.

Pour plus de clarté, les parties neutralisées des bandes et les bandes collectrices ont été hachurées.

Dans l'exemple décrit, la largeur de chaque bande est de 3,5 mm et la distance d'une bande à la bande voisine est également de 3,5 mm. La présence de ces bandes n'affecte pratiquement pas la visibilité à travers la surface transparente 1.

Les bandes collectrices 3, 4 sont reliées à un commutateur 5 qui permet soit de relier la bande 3 à un générateur de tension 6 et la bande 4 à la masse M (figure 1), soit, inversement, de relier la bande 3 à la masse et la bande 4 au générateur 6. Ce commutateur est actionné par une commande 7 qui sera précisée plus loin.

Les bandes réceptrices R1 à R4 sont reliées à un étage d'exploration 8 qui connecte successivement ces bandes à un voltmètre V.

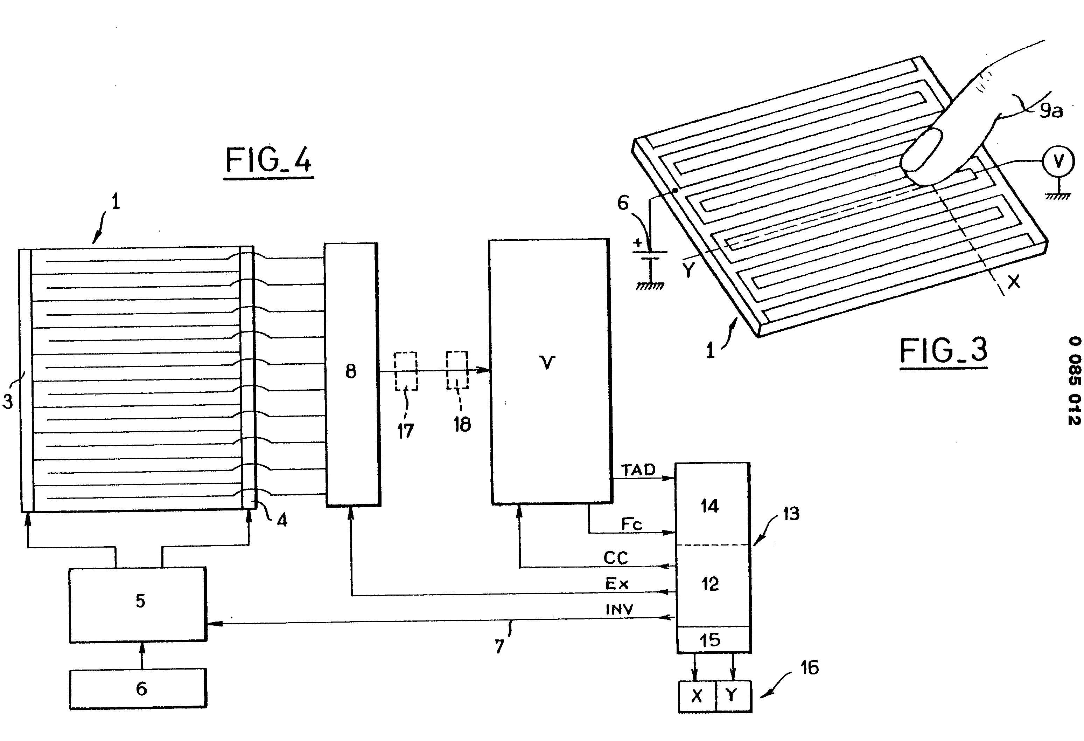

L'utilisation de l'appareil dont le principe vient d'être décrit consiste à déterminer les coordonnées X et Y d'un point de la surface que l'on matérialise par le contact d'un objet conducteur 9 (figure 1) qui peut être le doigt 9a d'un opérateur (figure 3). L'objet doit avoir des dimensions telles qu'il recouvre deux bandes voisines par exemple E2 et R2 (figure 1) établissant un pont électrique P entre ces deux bandes.

Dans l'exemple représenté sur la figure 1, la bande réceptrice R2 est portée, du fait du contact de l'objet, à un certain potentiel détecté par le volmètre V, et l'on convient que l'ordonnée Y est donné par le numéro d'ordre de cette bande.

Le calcul de l'abscisse X s'effectue à partir du schéma de la figure 2, sur laquelle on a supposé que le générateur de tension était un générateur 6a d'une tension continue U, d'environ 15 V.

Si L est la longueur utile d'une bande réceptrice, on a, du fait de la forte résistance interne du voltmètre V :

$$X = (u/U)L,$$

en appelant u la tension mesurée par le voltmètre.

Si on répète l'opération en intervertissant le générateur 6a et la masse M, on mesure une nouvelle tension u', et l'on a :

$$L - X = (u'/U)L$$

D'où :

$$X = u.L/u + u'$$

On constate que ce procédé rend la mesure indépendante de la tension d'alimentation U dont des variations accidentelles pourraient fausser la mesure, ainsi que de la valeur de la résistance du pont de contact établi par l'objet conducteur 9 à la condition que cette résistance soit sensiblement inférieure à la résistance interne du voltmètre afin de ne pas perturber la mesure. Dans un exemple de réalisation on a choisi un voltmètre de résistance interne égale à 2 MΩ sachant que la résistance du doigt d'un opérateur mesurée sous une tension appliquée de fréquence 1 KHz est de l'ordre de 500 KΩ. On voit donc que l'on peut utiliser des objets conducteurs 9 présentant une très large gamme de résistances depuis une valeur très faible jusqu'à des valeurs importantes de l'ordre du MΩ à condition de choisir pour effectuer les mesures un voltmètre d'impédance interne adaptée c'est-à-dire d'impédance sensiblement plus forte.

On va maintenant décrire en référence à la figure 4, l'infrastructure électronique du dispositif, et compléter la description du procédé.

Sur cette figure, les bandes ont été représentées en plus grand nombre que sur la figure 1, mais ce nombre est essentiellement variable en fonction des dimensions de la surface 1. Les éléments déjà décrits ont été reproduits avec les mêmes numéros de référence. Ces éléments sont essentiellement le commutateur 5 d'inversion de l'alimentation, le générateur 6, l'étage d'exploration 8 et le voltmètre V qui est un voltmètre numérique.

Un étage de commande 12 d'un bloc de calcul 13 est relié à l'étage d'exploration 8 pour commander l'exploration cadencée des bandes réceptrices. Dans l'exemple décrit, cette cadence est de 5 ms d'une bande à la bande voisine.

Le voltmètre V est relié à un étage d'entrée 14 du bloc 13 pour transmettre à cet étage un message TAD comprenant la valeur numérique de la tension mesurée et l'adresse de la bande réceptrice où cette mesure a été effectuée. . Une autre liaison permet la transmission d'un signal FC de fin de conversion analogique/numérique.

L'étage de commande 12 est lui aussi relié au voltmètre V pour lui envoyer un signal CC de commande de conversion.

Enfin l'étage d'exploration 8 est placé sous la commande de l'étage 12 qui lui envoie un signal EX de cadencement d'exploration, et le commutateur 5 est placé, par l'intermédiaire de la ligne 7, sous la commande du même étage 12 qui lui envoie un signal INV.

Le bloc de calcul 13 comprend encore un étage de codage 15 relié à un dispositif de visualisation 16 indiquant les coordonnées X et Y mesurées.

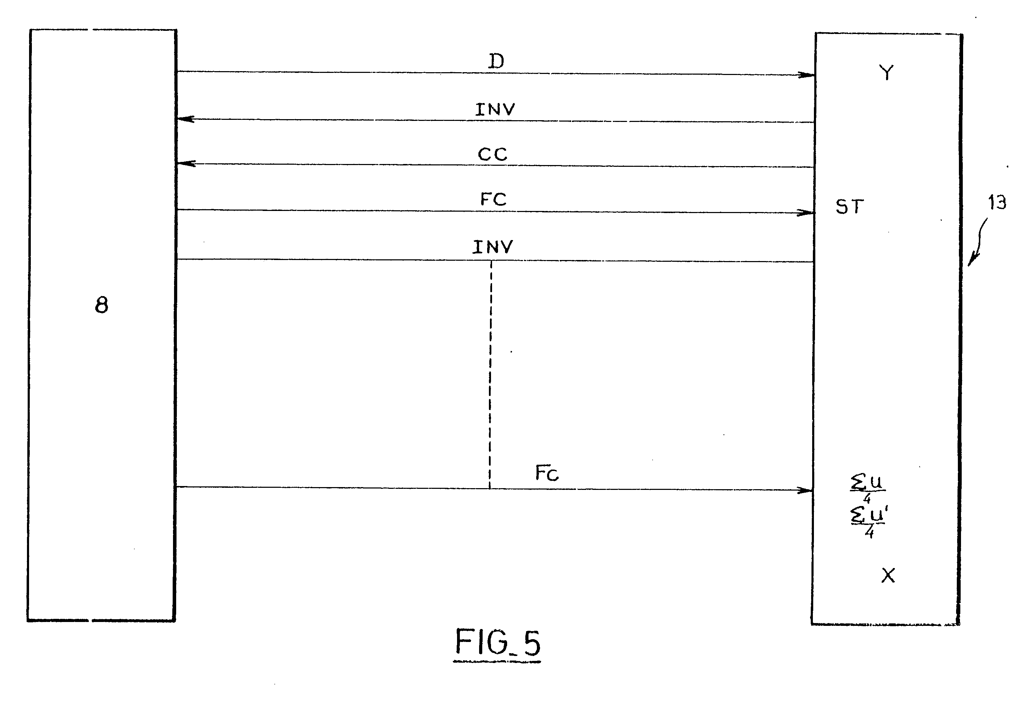

On va maintenant décrire, en référence notamment à la figure 5, le fonctionnement d'ensemble du dispositif et le procédé de mesure. Sur le diagramme de la figure 5, la séquence de mesure se déroule du haut en bas de la figure.

Initialement, l'étage d'exploration 8 balaye successivement les bandes réceptrices à la cadence de 5 ms d'une bande à la suivante et, en l'absence de l'objet 9, mesure à chaque fois un potentiel nul ou, plus précisément, inférieur à un seuil prédéterminé S.

Dès que l'objet vient au contact de la surface 1, un potentiel supérieur au seuil S est détecté, ce qui provoque l'émission d'un signal D vers le bloc de calcul 13. Le numéro de la bande réceptrice où la détection a été faite est alors stocké pour fournir l'ordonnée Y. Puis, l'étage de commande 12 envoie l'ordre INV pour inverser la polarité appliquée aux bandes émettrices, suivi d'un ordre CC de mesure de tension et de conversion en numérique. Lorsque la conversion est terminée, l'étage 8 émet un ordre FC qui provoque le stockage ST de la mesure u convertie.

Par un nouvel ordre INV, la polarité des bandes émettrices est inversée et une nouvelle mesure u' est effectuée et stockée.

On répète cinq fois ce processus. Puis on élimine la première mesure de chaque polarité, en vue de s'affranchir des phénomènes transitoires. Enfin, on calcule la moyenne des mesures u et la moyenne des mesures u' pour en déduire l'abscisse X au moyen de la formule indiquée plus haut.

Les résultats sont enfin affichés sur le dispositif de visualisation 16.

Le processus de calcul est alors arrêté, et le balayage par l'étage 8 ne reprend que lorsque le potentiel de la bande réceptrice détectée est revenu au-dessous du seuil S, c'est-à-dire quand l'objet 9 n'est plus au contact de la surface.

Tout ce qui vient d'être dit s'applique en cas où le générateur 6 est un générateur de tension continue.

En variante, on peut utiliser un générateur de tension alternative d'une fréquence de 1 kHz. On dispose alors, entre l'étage d'exploration 8 et le voltmètre V, un filtre actif passe-bande 17 correspondant à la bande de 1 kHz suivi d'un redresseur actif 18 qui fournit une tension continue à l'entrée du voltmètre.

Le processus de mesure est sensiblement le même, sauf qu'on effectue cinq mesures de suite avec le générateur d'un côté et la masse de l'autre, puis à nouveau cinq mesures de suite après avoir interverti le générateur et la masse.

L'avantage du courant alternatif est, grâce au filtrage, d'éliminer les composantes de 50 Hz ou 60 Hz induites par l'environnement, ainsi que les parasites éventuellement créés par des thyristors situés dans le voisinage.

Dans tous les cas, l'invention permet, par une désignation du doigt, de définir les coordonnées d'un point quelconque d'une image fixe ou mouvante projetée sur la surface 1, et de répéter cette opération à intervalles rapprochés. La précision obtenue est excellente, et est en rapport avec la surface de l'objet de contact utilisé, par exemple du doigt. L'appareil est également très sûr, puisque, si une salissure se produit sur la surface, le court-circuit qu'elle provoque fera apparaître des coordonnées en l'absence de l'objet et permettra de la déceler immédiatement.

L'invention prévoit encore, en vue d'un usage conversationnel par visualisation, de prédéterminer les abscisses des zones de contact en ménageant des parties élargies sur les bandes (figure 6). Par exemple, des élargissements 21 peuvent être placés sur les bandes émettrices E, pour définir des touches correspondant à des valeurs alphanumériques.

Suivant une autre disposition la bande émettrice peut être dédoublée suivant une autre disposition la bande émettrice peut être dédoublée suivant E' et E" de part et d'autre de la bande réceptrice R' et comporter des élargissements 22' et 22".

Bien entendu, l'invention n'est pas limitée aux exemples décrits mais couvre de nombreuses variantes accessibles à l'homme de l'art. Les bandes pourraient avoir des formes variées en fonction des applications par exemple une plus grande densité dans une zone de l'écran où l'on a besoin d'une résolution plus fine, ou encore ne pas être rectilignes mais présenter des formes sinusoïdales ou en créneaux ou encore être les

unes circulaires et concentriques et les autres rayonnantes pour définir un point par ses coordonnées polaires.

De même les bandes pourraient être constituées par des dépôts autres que l'oxyde d'étain, par exemple de l'oxyde d'indium ou de cadmium ou d'autres mélanges de divers oxydes métalliques, être dopées avec d'autres dopants que le fluor par exemple de l'antimoine et déposées par phase vapeur ou par projection cathodique.

Elles pourraient également être déposées sans difficulté en couches plus épaisses et plus résistantes à l'abrasion que dans l'exemple décrit en présentant ainsi une gamme de résistance de surface très large descendant par exemple jusqu'à 10 Ω pour un tronçon de bandes d'une longueur égale à sa largeur.

Ces bandes pourraient avoir des largeurs et des espacements différents de ceux mentionnés, ceux-ci ne devant satisfaire qu'à la condition de pouvoir être facilement mis en connexion électrique par le doigt ou tout autre organe conducteur tel que par exemple l'extrémité d'un bâtonnet en caoutchouc conducteur ou d'un stylet muni de brins conducteurs métalliques élastiques de dimensions appropriées adaptées à la largeur et à l'espacement des bandes émettrices et réceptrices. Dans ces trois cas, toute infrastructure électronique liée à l'objet est donc supprimée.

D'autre part pour des raisons de facilité de connexions du clavier vers les circuits électroniques, toutes les connexions des bandes réceptrices $R_1$ à $R_4$ et émettrices $E_1$ à $E_5$ pourraient être ramenées sur un seul côté de l'écran.

De plus, les bandes 3 et 4 pourraient être supprimées, les connexions nécessaires étant assurées par une bande de caoutchouc composée de manière connue alternativement de zones conductrices et de zones résistantes dont le pas serait choisi pour assurer la connexion avec le réseau des bandes émettrices ($E_1$ à $E_5$) et réceptrices ($R_1$ à $R_4$) d'une part et d'autre part avec un circuit imprimé souple assurant la liaison avec le système de détection, ce caoutchouc étant pincé par des moyens appropriés entre la plaque écran et le circuit imprimé souple.

Par ailleurs, le support des bandes peut être constitué comme dans dans l'exemple décrit, directement par la face avant d'un tube cathodique mais également la face avant de tout autre type d'écran de visualisation par exemple des systèmes d'affichage à plasma ou à diodes électroluminescentes ou à cristaux liquides ; le support peut également constituer un écran que l'on place devant un autre écran comme ceux mentionnés ci-dessus, ou devant un plan (de ville, de métropolitain, etc.).

Dans ces derniers cas, ce support peut être du verre mais également tout autre substance minérale ou organique transparente isolante, une matière plastique rigide comme le plexiglass ou souple comme des polycarbonates en film dans la mesure où les surfaces sont traitées pour permettre de déposer des bandes conductrices ayant les mêmes caractéristiques de transparence, tenue à l'usure et résistance électrique.

## Revendications

1. Procédé pour déterminer les coordonnées (X, Y) d'un point sur une surface (1) comportant un certain nombre de bandes conductrices ($R_1$ à $R_4$ et $E_1$ à $E_5$) en le désignant par le contact d'un objet (9) avec cette surface, caractérisé en ce qu'on effectue les opérations suivantes :

a) on dispose sur la surface un certain nombre de bandes conductrices résistantes émettrices ($E_1$ à $E_5$), montées en parallèle aux bornes d'un générateur de tension (6) et un certain nombre de bandes conductrices réceptrices ($R_1$ à $R_4$) isolées entre elles et par rapport aux bandes émettrices ($E_1$ à $E_5$) et imbriquées entre ces dernières de telle sorte qu'il existe une bande conductrice réceptrice ($R_1$ à $R_4$) entre deux bandes conductrices résistantes émettrices ($E_1$ à $E_5$),

b) on touche la surface (1) avec un objet suffisamment conducteur (9) de dimensions telles qu'il établisse un pont électrique (P) entre une bande conductrice résistante émettrice ($E_1$ à $E_5$) et une bande conductrice réceptrice ($R_1$ à $R_4$),

c) on détermine laquelle des bandes isolées a vu son potentiel varier, pour en déduire l'une (Y) des coordonnées du point de contact,

d) on mesure cette variation de potentiel pour en déduire l'autre coordonnée (X) du point de contact.

2. Procédé conforme à la revendication 1, caractérisé en ce qu'on explore le potentiel des bandes réceptrices cycliquement jusqu'à détecter sur l'une de ces bandes un potentiel différent de celui des autres bandes, et en ce qu'on arrête alors l'exploration pour effectuer une mesure de ce potentiel.

3. Procédé conforme à la revendication 2, caractérisé en ce qu'on applique à une extrémité de chaque bande émettrice un potentiel continu, l'autre extrémité de chaque bande étant mise à la masse.

4. Procédé conforme à la revendication 3, caractérisé en ce que, après une mesure de potentiel, on inverse la polarité des bandes émettrices pour effectuer une nouvelle mesure, et en ce qu'on répète ce cycle un certain nombre de fois.

5. Procédé conforme à la revendication 2, caractérisé en ce qu'on applique à une extrémité de chaque bande émettrice un potentiel alternatif d'environ 1 kHz, l'autre extrémité de chaque bande étant mise à la masse, et en ce qu'on filtre la tension mesurée.

6. Procédé conforme à la revendication 5, caractérisé en ce que l'on effectue successivement un certain nombre de mesures de potentiel, en ce qu'on intervertit ensuite le potentiel alternatif et la masse, et en ce qu'on effectue à nouveau le même nombre de mesures.

7. Procédé conforme à l'une des revendications 2 à 6, caractérisé en ce qu'on calcule la moyenne des potentiels mesurés au cours des mesures successives.

8. Procédé conforme à l'une des revendications 2 à 7, caractérisé en ce qu'on recommence l'exploration quand la bande réceptrice détectée est revenue à un potentiel inférieur au seuil (S).

9. Dispositif pour déterminer les coordonnées (X, Y) d'un point sur une surface (1) comportant un certain nombre de bandes conductrices (E₁ à E₅, R₁ à R₄) pour former des zones distinctes sensibles sélectivement au contact d'un objet (9), caractérisé en ce qu'il comprend un certain nombre de bandes conductrices résistantes émettrices (E₁ à E₅) ayant chacune une borne (10) d'extrémité pour liaison à la masse (M) et une borne (10) d'extrémité pour liaison à un générateur de tension (6), et un certain nombre de bandes conductrices réceptrices (R₁ à R₄) isolées entre elles et par rapport aux bandes émettrices (E1 à E5) et imbriquées entre ces dernières de telle sorte qu'il existe une bande conductrice réceptrice (R₁ à R₄) entre deux bandes résistantes émettrices (E₁ à E₅), chacune de ces bandes conductrices réceptrices ayant une borne d'extrémité (11) pour liaison en parallèle avec un appareil (V) de mesure de potentiel, et présentant sur toute sa longueur une résistance linéaire sensiblement constante.

10. Dispositif conforme à la revendication 9, caractérisé en ce que les bandes émettrices et les bandes réceptrices sont rectilignes, parallèles et équidistantes.

11. Dispositif conforme à l'une des revendications 9 ou 10, caractérisé en ce qu'il comprend un étage d'exploration (8) pour commuter successivement les bandes réceptrices (R₁ à R₄) avec l'appareil (V) de mesure de potentiel.

12. Dispositif conforme à la revendication 11, caractérisé en ce qu'il comprend un bloc de calcul (13) relié à l'étage d'exploration (8) et à l'appareil (V) de mesure de potentiel pour calculer, à partir du numéro de la bande réceptrice portée à un potentiel supérieur à un seuil (S) prédéterminé, et de la valeur de ce potentiel, les coordonnées (X, Y) du point de contact de l'objet (9) avec la surface (1).

13. Dispositif conforme à la revendication 12, caractérisé en ce qu'il comprend un générateur de tension continue (6a) relié en parallèle à l'une des bornes (10) de chaque bande émettrice (E1 à E5).

14. Dispositif conforme à la revendication 12, caractérisé en ce qu'il comprend un générateur de tension alternative relié en parallèle à l'une des bornes (10) de chaque bande émettrice (E1 à E5).

15. Dispositif conforme à la revendication 14, caractérisé en ce qu'il comprend un étage de filtrage (17) et un étage de redressement (18) intercalés entre l'étage d'exploration (8) et l'appareil (V) de mesure du potentiel.

16. Dispositif conforme à l'une des revendications 9 à 15, caractérisé en ce qu'il comprend un étage d'inversion (5) relié au bloc de calcul (13) pour intervertir, sur les bandes émettrices (E1 à E5), la liaison avec la masse (M) et la liaison avec le générateur de tension (6).

17. Dispositif conforme à l'une des revendications 9 à 16, caractérisé en ce que la surface (1) est un écran de visualisation.

**Claims**

1. Method for determining the coordinates (X, Y) of a point on a surface (1) comprising a certain number of conducting strips (R1 to R4 and E1 to E5) by pin-pointing it through contact of an object (9) with said surface, characterized by the following operations :

a) a certain number of resistive conducting transmitting strips (E1 to E5) are laid on the surface parallel-connected with the terminals of a voltage generator (6), as are a certain number of conducting receiving strips (R1 to R4), inter-insulated and insulated with respect to the transmitting strips (E1 to E5) and interlaid between the latter such that a conducting receiving strip (R1 to R4) lies between two resistive conducting transmitting strips (E1 to E5) ;

b) the surface (1) is touched with a sufficiently conducting object (9) having dimensions such that it establishes an electrical bridge (P) between one resistive conducting transmitting strip (E1 to E5) and a conducting receiving strip (R1 to R4) ;

c) the insulated strip in which there has been a variation in potential is determined whence one of the contact point coordinates (Y) is deduced, and

d) this variation in potential is measured in order to deduce the other contact point coordinate (X).

2. Method as claimed in claim 1, wherein the potential of the receiving strips is cyclically explored until a potential in one of these strips different from that in the other strips is detected, whereupon the exploration is halted in order to measure this potential.

3. Method as claimed in claim 2, wherein a known d.c. potential is applied to one end of each transmitting strip, the other end of each strip being connected to ground.

4. Method as claimed in claim 3, wherein after measuring the potential, the polarity of the transmitting strips is reversed to perform a further measurement, and this cycle is repeated a certain number of times.

5. Method as claimed in claim 2, wherein an alternating potential of around 1 khz is fed to one end of each transmitting strip, the other end of each strip being connected to ground and the measured voltage is filtered.

6. Method as claimed in claim 5, wherein the potential is successively measured a certain number of times, then the alternating potential and ground inverted and the same number of measurements taken again.

7. Method as claimed in any one of claims 2 to 6, wherein the average value of the potentials measured during the successive readings is calculated.

8. Method as claimed in any one of claims 2 to 7, wherein the exploration is resumed once the detected transmitting strip has dropped to a potential below the threshold (S).

9. Device for determining the coordinates (X, Y) of a point on a surface (1) comprising a certain number of conducting strips (E1 to E5, R1 to R4) to form separate areas selectively sensitive to the contact of an object (9), characterized in that it comprises : a certain number of resistive conducting transmitting strips (E1 to E5) each having one end terminal (10) for a connection to the ground (M) and one end terminal (10) for a connection to a voltage generator (6), and a certain number of conducting receiving strips (R1 to R4) inter-insulated and insulated with respect to the transmitting strips (E1 to E5) and interlaid between the latter such that a conducting receiving strip (R1 to R4) lies between two resistive transmitting strips (E1 to E5), each of these conducting receiving strips having one end terminal (11) for a parallel-connection with a potential measuring apparatus (V) and offering substantially constant linear resistance over its whole length.

10. Device as claimed in claim 9, wherein the transmitting strips and receiving strips are rectilinear, parallel and evenly spaced.

11. Device as claimed in one of claims 9 or 10, wherein it comprises an exploring stage (8) for successively switching the receiving strips (R1 to R4) with the potential measuring apparatus (V).

12. Device as claimed in claim 11, wherein it comprises a calculating unit (13) wired to the exploring stage (8) and to the potential measuring apparatus (V) in order to calculate the coordinates (X, Y) of the contact point of the object (9) with the surface (1), based on the number of the receiving strip upped in potential to a value greater than a predetermined threshold (S) and on the value of this potential.

13. Device as claimed in claim 12, wherein it comprises a d. c. voltage generator (6a) parallel-connected to one of the terminals (10) on each transmitting strip (E1 to E5).

14. Device as claimed in claim 12, wherein it comprises an alternating voltage generator parallel-connected to one of the terminals (10) on each transmitting strip (E1 to E5).

15. Device as claimed in claim 14, wherein it comprises a filtering stage (17) and a rectifying stage (18) inserted between the exploring stage (8) and the potential measuring apparatus (V).

16. Device as claimed in one of claims 9 to 15, wherein it comprises an inverting stage (5) wired to the calculating unit (13) for inverting the connection to the ground (M) and the connection to the voltage generator (6) on the transmitting strips (E1 to E5).

17. A device as claimed in one of claims 9 to 16, wherein the surface (1) is a display screen.

### Patentansprüche

1. Verfahren zur Bestimmung der Koordinaten (XY) eines Punktes auf einer Oberfläche (1), die eine bestimmte Anzahl von Leiterstreifen ($R_1$ bis $R_4$ und $E_1$ bis $E_5$) aufweist, indem er durch Berührung eines Gegenstandes (9) mit dieser Oberfläche bezeichnet wird, dadurch gekennzeichnet, daß die folgenden Operationen ausgeführt werden :

a) auf der Oberfläche werden eine bestimmte Anzahl von resistiven Sendeleiterstreifen ($E_1$ bis $E_5$), die in Parallelschaltung an die Anschlüsse eines Spannungsgenerators (6) angeschlossen sind, und eine bestimmte Anzahl von Empfangsleiterstreifen ($R_1$ bis $R_4$) angeordnet, die untereinander und von den Sendeleiterstreifen ($E_1$ bis $E_5$) isoliert und zwischen letzteren derart eingefügt sind, daß zwischen zwei resistiven Sendeleiterstreifen ($E_1$ bis $E_5$) ein Empfangsleiterstreifen ($R_1$ bis $R_4$) vorhanden ist,

b) die Oberfläche (1) wird mit einem ausreichend leitfähigen Gegenstand (9) berührt, dessen Abmessungen derart sind, daß er eine elektrische Brücke (P) zwischen einem resistiven Sendeleiterstreifen ($E_1$ bis $E_5$) und einem Empfangsleiterstreifen ($R_1$ bis $R_4$) herstellt,

c) es wird festgestellt, welcher der isolierten Streifen eine Potentialvariation erfahren hat, um daraus die eine (Y) der Koordinaten des Kontaktpunktes abzuleiten,

d) diese Potentialvariation wird gemessen, um daraus die andere Koordinate (X) des Kontaktpunktes abzuleiten.

2. Verfahren nach Anspruch 1, dadurch gekennzeichnet, daß das Potential der Empfangsstreifen zyklisch abgefragt wird, bis an einem dieser Streifen ein Potential erfaßt wird, das verschieden von dem der anderen Streifen ist, und daß dann die Abfragung beendet wird, um eine Messung dieses Potentials durchzuführen.

3. Verfahren nach Anspruch 2, dadurch gekennzeichnet, daß an ein Ende jedes Sendeleiterstreifens ein Gleichpotential angelegt wird, während das andere Ende jedes Streifens an Masse gelegt ist.

4. Verfahren nach Anspruch 3, dadurch gekennzeichnet, daß nach einer Potentialmessung die Polarität der Sendestreifen invertiert wird, um eine neue Messung vorzunehmen, und daß dieser Zyklus mehrmals mit einer bestimmten Anzahl wiederholt wird.

5. Verfahren nach Anspruch 2, dadurch gekennzeichnet, daß an ein Ende jedes Sendestreifens ein Wechselpotential von etwa 1 kHz angelegt wird, während das andere Ende jedes Streifens an Masse gelegt ist, und daß die gemessene Spannung gefiltert wird.

6. Verfahren nach Anspruch 5, dadurch gekennzeichnet, daß nacheinander eine bestimmte Anzahl von Potentialmessungen vorgenommen wird, daß anschließend das Wechselpotential und Masse miteinander vertauscht werden und daß erneut dieselbe Anzahl von Messungen vorgenommen wird.

7. Verfahren nach einem der Ansprüche 2 bis 6, dadurch gekennzeichnet, daß der Mittelwert der Potentiale berechnet wird, die im Verlauf der aufeinanderfolgenden Messungen gemessen wurden.

8. Verfahren nach einem der Ansprüche 2 bis 7, dadurch gekennzeichnet, daß die Abfragung wiederbegonnen wird, wenn der erfaßte Empfangsstreifen auf ein Potential zurückgelangt ist, das niedriger als der Schwellwert (S) ist.

9. Vorrichtung zur Bestimmung der Koordinaten (X, Y) eines Punktes auf einer Oberfläche (1), die eine bestimmte Anzahl von Leiterstreifen ($E_1$ bis $E_5$, $R_1$ bis $R_4$) aufweist, um verschiedene Zonen zu bilden, die bei Berührung mit einem Gegenstand (9) selektiv fühlbar sind, dadurch gekennzeichnet, daß sie eine bestimmte Anzahl vom resistiven Sendeleiterstreifen ($E_1$ bis $E_5$) umfaßt, von denen jeder einen Endanschluß (10) zur Verbindung mit Masse (M) und einen Endanschluß (10) zur Verbindung mit einem Spannungsgenerator (6) aufweist, und eine bestimmte Anzahl von Empfangsleiterstreifen ($R_1$ bis $R_4$) umfaßt, die untereinander und von den Sendestreifen ($E_1$ bis $E_5$) isoliert sowie zwischen letztere derart eingefügt sind, daß zwischen zwei resistiven Sendestreifen ($E_1$ bis $E_5$) ein Empfangsleiterstreifen ($R_1$ bis $R_4$) vorhanden ist, wobei jeder dieser Empfangsleiterstreifen einen Endanschluß (11) zur Parallelschaltung mit einem Potentialmeßgerät (V) aufweist und über seine gesamte Länge einen im wesentlichen konstanten linearen Widerstand aufweist.

10. Vorrichtung nach Anspruch 9, dadurch gekennzeichnet, daß die Sendestreifen und Empfangsstreifen geradlinig, parallel und äquidistant sind.

11. Vorrichtung nach Anspruch 9 oder 10, dadurch gekennzeichnet, daß sie eine Abfragestufe (8) zur nacheinander erfolgenden Anschaltung der Empfangsstreifen ($R_1$ bis $R_4$) an das Potentialmeßgerät (V) umfaßt.

12. Vorrichtung nach Anspruch 11, dadurch gekennzeichnet, daß sie einen Rechenblock (13) umfaßt, der mit der Abfragestufe (8) und mit dem Potentialmeßgerät (V) verbunden ist, um aus der Nummer des Empfangsstreifens, welcher auf ein einen vorbestimmten Schwellwert (S) überschreitendes Potential gebracht wurde, und aus dem Wert dieses Potentials die Koordinaten (X, Y) des kontaktpunktes des Gegenstandes (9) mit der Oberfläche (1) zu berechnen.

13. Vorrichtung nach Anspruch 12, dadurch gekennzeichnet, daß sie einen Gleichspannungsgenerator (6a) umfaßt, der parallel zu einem der Anschlüsse (10) jedes Sendestreifens (E1 bis E5) geschaltet ist.

14. Vorrichtung nach Anspruch 12, dadurch gekennzeichnet, daß sie einen Wechselspannungsgenerator umfaßt, der parallel zu einem der Anschlüsse (10) jedes Sendestreifens (E1 bis E5) geschaltet ist.

15. Vorrichtung nach Anspruch 14, dadurch gekennzeichnet, daß sie eine Filterstufe (17) und eine Gleichrichterstufe (18) umfaßt, die zwischen die Abfragestufe (8) und das Potentialmeßgerät (V) geschaltet sind.

16. Vorrichtung nach einem der Ansprüche 9 bis 15, dadurch gekennzeichnet, daß sie eine Umtauscherstufe (5) umfaßt, die mit dem Rechenblock (13) verbunden ist, um an den Sendestreifen (E1 bis E5) die Verbindung mit Masse (M) und die Verbindung mit dem Spannungsgenerator (6) zu vertauschen.

17. Vorrichtung nach einem der Ansprüche 9 bis 16, dadurch gekennzeichnet, daß die Oberfläche (1) ein Sichtanzeigeschirm ist.

0 085 012

FIG_1

FIG_2

FIG_6

## FIG_4

## FIG_3

0 085 012

FIG_5

0 085 012